# DEMANDE DE BREVET EUROPEEN

(11) **EP 2 390 732 A1**
(43) Date de publication de la demande: **30.11.2011**
(21) Numéro de dépôt: 10164172.8
(22) Date de dépôt: 27.05.2010
(51) Int. Cl.: G04B 1/10, G04B 1/14, G04B 1/16, G04B 1/18, G04D 3/00

(54) **Ressort de barillet**

(71) Demandeur: Association Suisse pour la Recherche Horlogère, 2002 Neuchâtel (CH)
(72) Inventeur: Winkler, Pascal, 2072, Saint-Blaise (CH); Teres, Yvan, 2013, Colombier (CH)
(74) Mandataire: GLN

(57) **Abrégé**

La présente invention concerne un ressort de barillet (10) pour mécanisme entraîné par un ressort moteur, notamment pour pièce d'horlogerie, formé d'un ruban en verre métallique monolithique. L'invention propose d'intégrer au moins une fonction supplémentaire, réalisée par une partie fonctionnelle intégrée au ressort.

## Description

### Domaine technique

La présente invention se rapporte au domaine des mécanismes entraînés par un ressort moteur, notamment au domaine de l'horlogerie. Elle concerne, plus particulièrement, un ressort de barillet formé d'un ruban en verre métallique monolithique.

### Etat de la technique

On connait du document CH 698962, la possibilité de réaliser des ressorts de barillet en verre métallique, monolithique. Le terme « verre métallique » désigne un alliage métallique amorphe ou métal amorphe, dont l'objet solide est obtenu à partir de l'alliage fondu. Les propriétés intrinsèques des verres métalliques leur confèrent de très bonnes aptitudes élastiques, une excellente ductilité, une grande résistance mécanique ainsi qu'un comportement en fatigue optimisé. L'application de ce type de matériau à des ressorts de barillet, notamment pour pièce d'horlogerie, est donc particulièrement bien adaptée. Le document précité propose également une méthode de réalisation d'un tel ressort de barillet, dans laquelle on donne à une lame de verre métallique une forme aussi proche que possible d'une forme prédéterminée, par une technique dite de Planar Flow Casting (trempe sur roue), avant d'effectuer la relaxation de la lame pour fixer sa forme en la chauffant, avant, finalement, de la refroidir.

La présente invention se propose d'aller plus loin dans l'utilisation de verre métallique pour la réalisation de ressort de barillet, y compris dans la méthode pour y parvenir.

### Divulgation de l'invention

Particulièrement, la présente invention propose de réaliser un ressort de barillet formé d'un ruban en verre métallique monolithique, conformé de manière à comporter au moins une partie fonctionnelle pour réaliser au moins une fonction supplémentaire à la fonction ressort.

Différentes fonctions supplémentaires peuvent ainsi être réalisées, comme mentionné dans les revendications. Ces fonctions peuvent éventuellement être combinées entre elles.

### Brève description des dessins

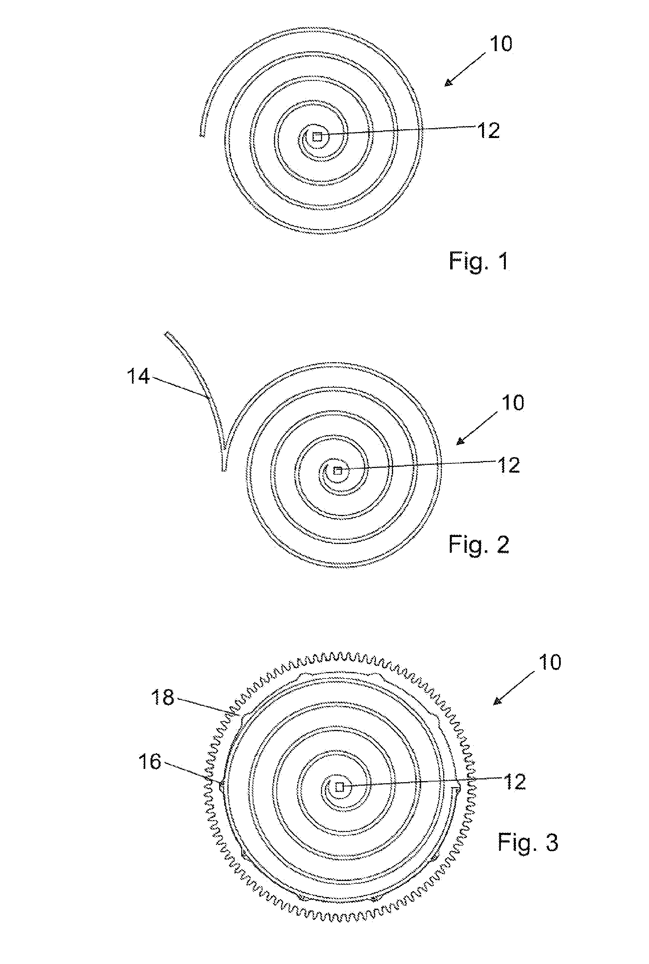

D'autres détails de l'invention apparaîtront plus clairement à la lecture de la description qui suit, proposée en référence au dessin annexé, dans lequel les figures 1 à 6 illustrent différentes variantes de barillet intégrant une fonction supplémentaire.

### Mode(s) de réalisation de l'invention

Les figures proposent des ressorts de barillet en verre métallique. Outre la fonction normale d'un ressort de barillet, c'est-à-dire la fonction ressort permettant d'emmagasiner de l'énergie, les ressorts de barillet selon l'invention intègrent une fonction supplémentaire. Autrement dit, dans une réalisation monolithique, les ressorts de barillet sont conformés de manière à présenter une partie fonctionnelle, permettant de réaliser cette fonction supplémentaire.

Cette possibilité est notamment offerte par un procédé de réalisation qui est un aspect de l'invention. En effet, l'une des idées intéressantes ayant permis d'aboutir à l'invention est d'utiliser une méthode de fabrication totalement différente de ce que propose l'état de la technique, particulièrement le document précité, pour obtenir un ressort de barillet en verre métallique. Le procédé selon l'invention est particulièrement adapté à la réalisation d'un ressort de barillet mais peut également être utilisé pour réaliser d'autres pièces ayant des formes complexes.

Ce procédé comprend tout d'abord la réalisation d'un moule ayant la forme de la pièce que l'on souhaite obtenir. Ce moule est avantageusement réalisé en silicium par des techniques de gravure profonde. Le moule résiste ainsi aux températures de fusion des verres métalliques, tout en permettant de réaliser des formes complexes, de manière très précise. Ces techniques sont bien connues de l'homme du métier et n'ont pas besoin d'être décrites de manière complète.

Le moule étant obtenu, on peut ensuite couler du verre métallique en fusion dans le moule, laisser le verre refroidir, et démouler la pièce. La précision des moules réalisés fait qu'il n'est même pas indispensable de retoucher les pièces obtenues. En outre, pour le démoulage, on peut dissoudre le moule, ce qui permet son élimination, quelque soit la complexité de la pièce réalisée, sans abîmer celle-ci. On notera que les ressorts pourraient également être moulés dans un moule en cuivre.

Grâce à ce procédé, il est ainsi possible de réaliser divers ressorts de barillet 10, intégrant une fonction supplémentaire. Comme le montre particulièrement la figure 1, la fonction supplémentaire peut être une fonction de liaison du ressort sur l'arbre de barillet, cette liaison rendant solidaire en rotation le ressort et l'arbre. On peut ainsi intégrer une bonde, directement au niveau du centre ou du moyeu du ressort, cette bonde étant munie d'un trou non circulaire 12, par exemple de forme carrée, qui, par coopération avec un arbre de forme correspondante, peut bloquer la rotation du ressort en référence à l'arbre.

Les figures 2 et 3 proposent un ressort dans lequel la fonction supplémentaire est une fonction de limitation du couple d'armage du barillet, réalisée par une bride glissante intégrée à la dernière spire du ressort. Sur la figure 3, le ressort présente une bride glissante « traditionnelle ». La dernière spire se termine par une portion supplémentaire 14 s'étendant vers l'extérieur, dans le sens inverse d'enroulement du spiral. La portion supplémentaire 14 étant réalisée de manière monolithique, et non rapportée, on évite ainsi une opération d'assemblage. On évite également toute modification de la structure du matériau au niveau de la liaison entre le ressort et la portion supplémentaire, modification que l'on risque d'avoir notamment lors d'une opération de soudage. On notera qu'une telle portion supplémentaire 14 peut également permettre de réaliser une fonction d'attache du ressort au tambour de barillet.

Sur la figure 3, la bride glissante est obtenue en réalisant, sur le pourtour extérieur de la dernière spire, une structure destinée à coopérer avec une structure complémentaire d'un tambour de barillet à l'intérieur duquel est monté le ressort. Particulièrement, la dernière spire peut présenter des ergots 16 destinés à coopérer avec des cavités 18 ménagées sur le pourtour intérieur du tambour. La coopération des ergots 16 avec les cavités 18 permet de désolidariser le tambour et le ressort au-delà d'un certain couple d'armage, défini par les forces exercées entre les ergots 16 et les cavités 18.

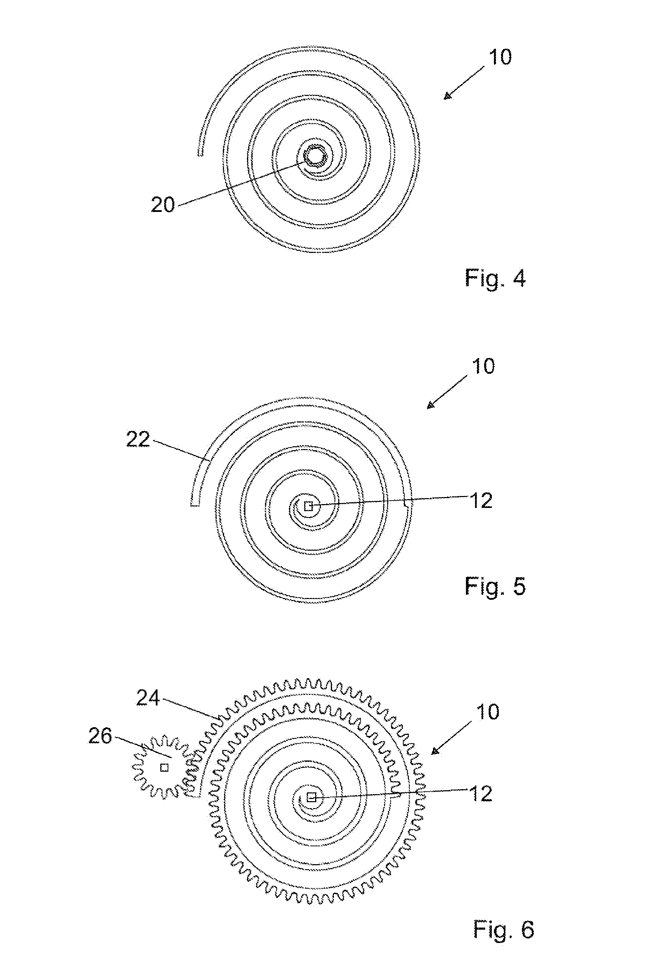

La figure 4 propose une fonction d'embrayage unidirectionnel permettant d'éviter que le ressort soit déformé et contraint dans le mauvais sens de rotation. Le moyeu présente ainsi une structure adaptée permettant, lorsque l'arbre de barillet est entraîné dans une direction, d'entraîner le ressort, tandis que la liaison entre l'arbre et le ressort est débrayée lorsque l'arbre est entraîné dans l'autre direction. Le moyeu du ressort peut ainsi comporter des encoches 20 définissant des cliquets élastiques, pour coopérer avec une structure correspondante ménagée au niveau de l'arbre. Lorsque l'arbre pivote dans une première direction, il entraîne les cliquets qui coopèrent rigidement avec lui pour armer le ressort, tandis que lorsque l'arbre pivote dans l'autre direction, les cliquets décliquètent et le ressort n'est pas entraîné.

Le ressort illustré sur la figure 5 réalise une fonction supplémentaire qui permet de maîtriser l'excentricité du développement du ressort, en mettant en oeuvre une portion du ruban, par exemple la dernière spire, dont l'épaisseur est variable. En agissant sur la rigidité élastique d'une portion de la lame, on peut corriger les problèmes de centrage observé lors du développement d'un ressort spiral. On peut ainsi, en ajustant l'épaisseur de la dernière spire du ressort, faire en sorte que le moyeu du ressort reste bien centré par rapport au barillet, ce qui permet ainsi de réduire les contraintes exercées sur l'arbre et sur les pivots. Cela permet de réduire l'usure des pivots et des paliers, et, par conséquent, leurs dimensions. Il est même envisageable, de la sorte, de supprimer les pivots du barillet et de ne garder qu'un élément de liaison permettant de transmettre le couple du ressort. On peut également réaliser une dernière spire possédant une portion 22 plus épaisse que le reste du ruban, afin de limiter le couple d'armage du barillet.

Enfin, le ressort proposé à la figure 6 présente une fonction supplémentaire d'entraînement cinématique, mettant en oeuvre une portion de lame dont le pourtour extérieur définit une denture 24. Cette denture 24 peut engrener directement avec le rouage de la montre représenté par une roue 26, ce qui permet de supprimer le tambour du barillet.

Les fonctions proposées ci-dessus peuvent, pour certaines, être combinées entre elles. Les figures ne sont que des exemples non limitatifs de l'invention dont l'essence est définie à la revendication 1.

## Revendications

1. Ressort de barillet (10) pour mécanisme entraîné par un ressort moteur, notamment pour pièce d'horlogerie, formé d'un ruban en verre métallique monolithique, **caractérisé en ce qu'**il comprend au moins une partie fonctionnelle pour réaliser au moins une fonction supplémentaire à la fonction ressort.

2. Ressort (10) selon la revendication 1, **caractérisé en ce que** ladite fonction supplémentaire est une fonction de liaison solidaire en rotation sur un arbre de barillet, réalisée par une bonde percée d'un trou non circulaire (12) intégrée audit ressort.

3. Ressort selon la revendication 1, **caractérisé en ce que** ladite fonction supplémentaire est une fonction d'attache du ressort au tambour de barillet, réalisée par une bride intégrée à la dernière spire du ressort.

4. Ressort selon la revendication 1, **caractérisé en ce que** ladite fonction supplémentaire est une fonction de limitation du couple d'armage du barillet, réalisée par une bride glissante intégrée à la dernière spire du ressort.

5. Ressort selon la revendication 4, **caractérisé en ce que** la dernière spire se termine par une portion supplémentaire (14) s'étendant vers l'extérieur.

6. Ressort selon la revendication 4, **caractérisé en ce que** la dernière spire possède une portion plus épaisse (22) que le reste du ruban.

7. Ressort selon la revendication 4, **caractérisé en ce que** la dernière spire comporte, sur son pourtour extérieur, une structure destinée à coopérer avec une structure complémentaire d'un tambour de barillet.

8. Ressort selon la revendication 7, **caractérisé en ce que** la dernière spire comporte, sur son pourtour extérieur, des ergots (16) destinés à coopérer avec des cavités (18) ménagées sur le pourtour intérieur d'un tambour de barillet.

9. Ressort selon la revendication 1, **caractérisé en ce que** ladite fonction supplémentaire est une fonction d'embrayage unidirectionnel réalisée par une structure adaptée du moyeu du ressort.

10. Ressort selon la revendication 9, **caractérisé en ce que** le moyeu du ressort
comporte des encoches (20) définissant des cliquets élastiques.

11. Ressort selon la revendication 1, **caractérisé en ce que** ladite fonction
supplémentaire est une fonction de centrage du développement du ressort, mettant en oeuvre une portion de lame dont l'épaisseur est variable.

12. Ressort selon la revendication 1, **caractérisé en ce que** ladite fonction
supplémentaire est une fonction d'entraînement cinématique, mettant en oeuvre une portion de lame dont le pourtour extérieur définit une denture (24).

13. Procédé de réalisation d'une pièce micrométrique en verre métallique, comprenant les étapes suivantes :
- réaliser un moule ayant la forme de la pièce que l'on souhaite obtenir,
- couler du verre métallique en fusion dans le moule,
- laisser le verre refroidir, et
- démouler la pièce.

14. Procédé selon la revendication 13, **caractérisé en ce que** ledit moule est réalisé en silicium par des techniques de gravure profonde.
